# EUROPEAN PATENT APPLICATION

(11) **EP 3 654 239 A1**
(43) Date of publication of application: **20.05.2020**
(21) Application number: 19208711.2
(22) Date of filing: 12.11.2019
(51) Int. Cl.: G06K 9/00

(54) **CONTACT AND NON-CONTACT IMAGE-BASED BIOMETRICS USING PHYSIOLOGICAL ELEMENTS**

(30) Priority: 13.11.2018 US 201862760318 P
(71) Applicant: Alitheon, Inc., Bellevue, WA 98004 (US)
(72) Inventor: Land, Scot E., Bellevue, Washington 98004 (US); Ross, David Justin, Bellevue, Washington 98004 (US); Shannon, Will, Bellevue, Washington 98004 (US); Ross, Robert, Bellevue, Washington 98004 (US); Qian, Cheng, Bellevue, Washington 98004 (US)
(74) Representative: Herre, Peter

(57) **Abstract**

An authentication system includes at least one device arranged to provide digital images of a physiological element. The physiological element is formed at a location of a living body. A digital fingerprinting unit is arranged to form a digital fingerprint from each of the provided digital images and further arranged to form the digital fingerprints of a plurality of different types of physiological elements. An association unit is arranged to associate each digital fingerprint with its corresponding living body, and a storage unit is arranged to store the digital fingerprints. An authentication unit is arranged to compare a newly acquired digital fingerprint to at least some of the digital fingerprints stored by the storage unit, and based on a determined match, the authentication unit is arranged to output an indication of authenticity.

## Description

### RELATED CASE

This application is a non-provisional of Application No. 62/760,318 filed November 13, 2018, incorporated herein by this reference.

### TECHNICAL FIELD

The present disclosure generally relates to image-based biometrics. More particularly, but not exclusively, the present disclosure relates to a single embodiment of a system, device, or method that can authenticate any number of different physiological elements.

### BACKGROUND

Many forms of biometric information are used to identify people. Each current biometric approach is uniquely based on features appropriate to the particular area of the body used for identification. Thus, fingerprint identification only works on fingers, face recognition only works on features of the face, iris recognition only works on irises, and so on.

Among the most common forms of human biometrics are fingerprints, palm prints, and face recognition. Each of these techniques has associated technical and privacy concerns. Fingerprints and palm prints are limited technically because they require contact with a glass plate prior to collecting the information. The platen in these techniques is subject to getting dirty, thereby reducing the quality of incoming data and operational "up time," and physical human contact with the platen can contribute to the spread of sickness or disease-causing pathogen. Assurances from those in the contact scanner industry that the "finger zone ... will be touched far less frequently than a restroom door" are not exactly reassuring. While face recognition systems do not suffer from the same limitations as fingerprint and palm print systems, it is known that face recognition systems require full-frontal images with reasonably high definition (e.g., 720p, 1080p). Not only do lower quality images and off-axis face angles cause problems, the need for substantial computing resources to store and process face images is also limiting.

What's more, face recognition, at least as commonly done from images, is worrisome from civil liberties, profiling, and privacy perspectives. Some forms of biometric information can be faked. Optical fingerprint methods can sometimes be fooled by model fingers inscribed with copied fingerprints, for example. More gruesomely, fingers can be detached and used in many fingerprint systems.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF SUMMARY OF THE DISCLOSURE

The invention is defined by the independent claims, taking due account of any element which is equivalent to an element specified in the claims. The dependent claims concern optional features of some embodiments of the invention. The present disclosure teaches devices, systems, and methods for using any part of any body as a source to biometrically identify the body (*i.e.,* the person, the animal, the plant, or any other living entity). As discussed herein, digital fingerprints are formed from one or more images of the surface and additionally or alternatively other features of the selected portion of the body. Several non-limiting embodiments are described, which involve surface skin features, pores, hairs, warts, moles, and the like, for example, though many other physiological features of the body could also be used.

In addition to the use of a body's surface texture features, other characteristics of the body may be used to form the digital fingerprints contemplated by the present disclosure. For example, depth-only information obtained by X-rays or other medical imaging may be used, bodily fluid analysis via spectroscopic techniques may be used, internal imaging (e.g., colonoscopy, endoscopy, otoscopy, ophthalmoscopy, and the like) may be used, and still other techniques may be used.

The embodiments expressly described in the present disclosure (e.g., the use in human biometrics) are not limiting. In one embodiment, an authentication system comprises: at least one image capture device arranged to provide one or more digital images of a physiological element, the physiological element formed at a location on or in a body, living or dead; a digital fingerprinting unit arranged to form a digital fingerprint from the provided digital images, wherein the digital fingerprinting unit is arranged to form the digital fingerprint responsive to at least one physiological element represented in the digital images, wherein the digital fingerprint unit forms the digital fingerprint in a manner that is agnostic to the location of the physiological element on or in the body; a storage unit arranged to store the digital fingerprints; an authentication unit having access to the storage unit and arranged to compare an acquired digital fingerprint to at least some of the digital fingerprints stored in the storage unit to generate a result; and wherein the authentication unit is configured to transmit a message based on the result.

In one preferred embodiment, the above authentication system extracts at least one feature from the image by applying at least one of Scale-Invariant Feature Transform (SIFT), Speeded Up Robust Features (SURF), or other feature detection approaches resistant to scale, rotation, translation and illumination variations.

In some embodiments, the above authentication system image capture device utilizes at least one of visible light, IR, UV, and any other means for acquiring a three-dimensional surface map of the body.

In an embodiment, the digital fingerprint may be linked to digital information or a program so that the linked resource is accessible by the digital fingerprint. The digital information linked to the digital fingerprint may be a reference file. Contents of the reference file may be something identifying the corresponding body, but it may not. For example, the digital fingerprint might be linked to a file that says, "whoever has one of these digital fingerprints can go into that secure space," with nothing that identifies per se the person involved.

This Brief Summary has been provided to introduce certain concepts in a simplified form that are further described in detail in at least the Detailed Description. Except where otherwise expressly stated, the Brief Summary does not identify key or essential features of the claimed subject matter, nor is it intended to limit the scope of the claimed subject matter.

### BRIEF DESCRIPTION OF THE DRAWINGS

To enable the reader to realize one or more of the above-recited and other advantages and features of the present disclosure, a more particular description follows by reference to specific embodiments thereof which are illustrated in the appended drawings. Understanding that these drawings depict only typical embodiments of the disclosure and are not therefore to be considered limiting of its scope, the present disclosure will be described and explained with additional specificity and detail through the use of the accompanying drawings in which:
FIG. 1 is a simplified block diagram of one example of a system consistent with the present disclosure.
FIG. 2 is a simplified diagram illustrating image capture using a non-contact scanner for the purpose of identification or authentication based on digital fingerprinting.
FIG. 3A is a simplified diagram illustrating image capture using a stationary contact scanner for the purpose of identification or authentication based on digital fingerprinting.
FIG. 3B is a simplified diagram illustrating image capture using a portable contact scanner for the purpose of identification or authentication based on digital fingerprinting.
FIG. 4 is a simplified diagram of an image capture station.
FIG. 5 is a simplified block diagram of a process for identification or authentication based on digital fingerprinting.

### DETAILED DESCRIPTION OF ONE OR MORE EMBODIMENTS

The present invention may be understood more readily by reference to this detailed description of the invention. The terminology used herein is for the purpose of describing specific embodiments only and is not limiting to the claims unless a court or accepted body of competent jurisdiction determines that such terminology is limiting. Unless specifically defined herein, the terminology used herein is to be given its traditional meaning as known in the relevant art.

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with computing systems including client and server computing systems, as well as networks have not been shown or described in detail to avoid unnecessarily obscuring descriptions of the embodiments.

Prior to setting forth the embodiments however, it may be helpful to an understanding thereof to first set forth definitions of certain terms that are used hereinafter.

The term physiological element refers to any whole or part of a living organism (*i.e.,* person, animal, plant, or any other living entity). A physiological element may be an entire body, an entire area of a body, or a portion of a larger area of a body. A physiological element may be visible to a naked eye. A physiological element may require magnification to be visible to a naked eye. Accordingly, there is no physical size limitation to the physiological elements described herein. A physiological element may be internal or external to the living organism. For example, physiological elements as discussed in the present disclosure may comprise bones, organs, muscles, connective and other tissue, fluids, hair, fur, skin, nails, scales, leaves, bark, roots, and any other elements of a living entity, and in such cases, constituent and related parts of the particular physiological element are also included. For example, in some embodiments of the present disclosure, "skin" is imaged in the method of biometric identification. In these cases, the skin comprises pores, hairs, warts, moles, scars, pigmentation, age spots, vascularization, tattoos, and other components of, or associated with, the skin. As the context permits, where the term, skin, is used in the present disclosure, the term, physiological element, may be suitably substituted.

The systems, methods, and devices taught in the present disclosure include non-contact, image-based biometrics using skin features. Many and various non-limiting imaging means are contemplated. These imaging devices that acquire the data used in the digital fingerprinting processes of the present disclosure may vary physically based on the selected physiological element (e.g., body part, portion of the body or body part, and the like), but the same underlying approach is applicable to any skin area. For example, while the back of a hand may be imaged differently than the middle of a forehead, the imagers used to capture digital images of both physiological elements, and many others, are contemplated.

Embodiments of the present disclosure include discussions directed toward skin patches on the fingers, the palms, and the forehead. Conventional fingerprint, palm print, and face recognition systems, however, are expressly excluded. The non-contact image-based biometric identification systems described in the present disclosure are different from the conventional systems. The areas of the skin chosen for identification are selected based on that may include, for example, security, privacy, ease of imaging in a given application, and so on. In principle, in addition to the various embodiments described herein, any physiological area of any body could, in principle, be used.

The present disclosure describes systems and devices that employ three general methods for collecting optical information used for skin-based biometric identification: two-dimensional (2D) imaging, focus stacked imaging, and full three-dimensional (3D) imaging. These three exemplary methods are not exclusive. Any method of acquiring a high-quality image of the desired physiological element is in view.

The systems, devices, and methods of the present disclosure analyze an image of the physiological element that has sufficient resolution to clearly show the natural detail and variation in the physiological element (e.g., skin). These variations may be genetically based, the result of wear and tear or aging, or from any other source provided at least some number of the variations are long-enough lasting to be adequate for induction and identification sessions that may be separated by relatively lengthy periods of time. While clarity of image is on factor of the systems, devices, and methods described herein, and while images having extreme or microscopic resolution may be used, extreme or microscopic resolution is generally not required. In most cases, resolution of a few hundred dots-per-inch (DPI) is enough, which is easily achievable with existing image acquisition means (e.g., cameras).

In the present disclosure, one or more particular points of interest on a body may be used to determine where an image of a desired physiological element will be captured. In general, the systems, devices, and methods of the present disclosure do not care about the specific features in that particular area, provided the result is a digital fingerprint that will work on any physiological element (e.g., body part). Certainly, features found by scale-invariant feature transform (SIFT), speeded up robust features (SURF), and other such algorithms would work adequately.

The most general characterization of a point of interest may include its texture (*e.g.,* the texture of the skin at that area), its location on a surface or within an object, local shape features, color, and so on, and the inclusion of any subset of these is also in view in this disclosure. Accordingly, the present disclosure describes systems, devices, and methods that are not limited to a single type of physiological element, and instead, these systems, devices, and methods are concurrently applicable to a wide plurality of physiological elements.

The present disclosure is distinguished from conventional technologies that are limited to a single physiological element. For example, ear shape recognition is one conventional technology. A system that identifies a person based on ear shape recognition cannot concurrently perform foot identification, iris identification, fingerprint identification, or any other type of identification. The existing ear recognition systems identify specific characteristics about the subject ear such as a shape of the outer ear's curve. These characteristics are very specific and they are not general. That is, ear shape recognition systems are not applicable to other body parts. The outer ear shape curve would not work on a nose, for example.

In contrast to the conventional systems, the systems, devices, and methods of the present disclosure are concurrently applicable to any number of physiological elements. A digital fingerprint, as applied herein, may contain any one or more of depth information, shape information, surface texture information, and other information. Accordingly, a digital fingerprint, as applied herein, may also contain only shape information, and nothing else, and still be in view in this disclosure. Different from the conventional technologies, however, even when the digital fingerprints of a single system, device, or method of the present disclosure contain only shape information, the shape information may be associated with any number of different types of physiological elements (e.g., noses, feet, toes, fingers, jowls, teeth, and the like) in a single system. may concurrently identify other also Alternatively,

The general approach of the present disclosure (e.g., where a foot or any other physiological element instead of an ear can be identified with the single system) is distinguishable from specific other systems where the same kind of data capture is currently used. To continue the ear shape recognition system example: these existing systems extract specific features about the ear, *i.e.,* the shape of outer ear's curve, for example. Conversely, even when the present systems, devices, and methods use only shape characteristics (e.g., without any texture component at all), the shape characteristics are defined as general parameters such as the X, Y, Z location of the points of interest, the local principal curvatures at the points of interest, and the directions of such curvatures, and so on, which are not limited to ears or any other physiological element.

The systems, devices, and methods of the present disclosure work on any physiological element (*e.g*., body part) using essentially identical technology: digital fingerprinting of the physiological element (*e.g*., skin) texture, shape, and related components. Some non-limiting examples that might be used for identification include the back, the front, or the entire hand, the forehead, ears, and various parts of the foot including the sole. Many others are contemplated.

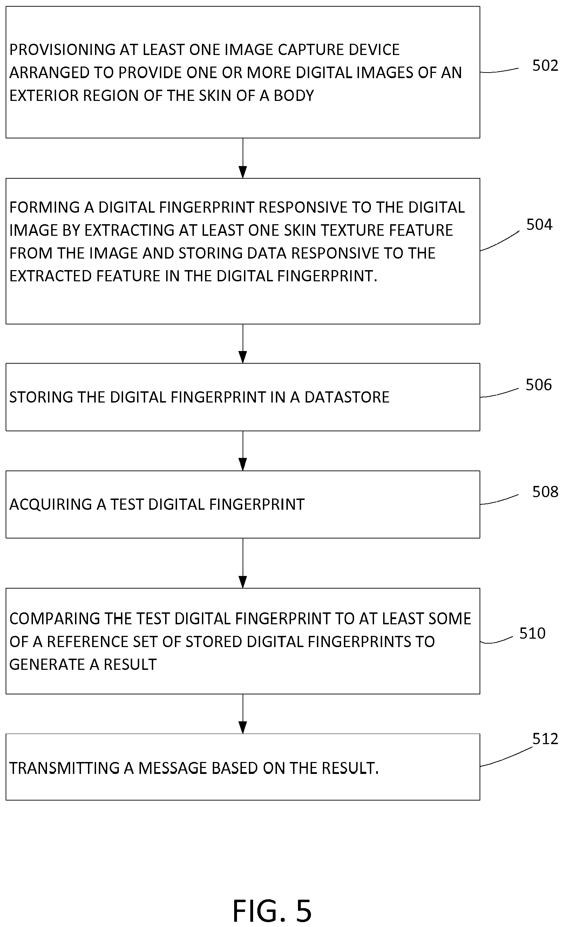

Figure 5 is a simplified block diagram of a process for identification or authentication based on digital fingerprinting. In this example, the process begins by provisioning at least one image capture device arranged to provide one or more digital images of an exterior region of the skin of a body, block 502. Then, forming a digital fingerprint responsive to the digital image by extracting at least one skin texture feature from the image and storing data responsive to the extracted feature in the digital fingerprint, block 504. Next is storing the digital fingerprint in a datastore, block 506. At some subsequent time, the system acquires a new or test digital fingerprint, block 508. It then compares the test digital fingerprint to at least some of a reference set of stored digital fingerprints to generate a result, block 510. Finally, the process calls for transmitting a message based on the result, block 512. The message may indicate a best fit match, or the absence of a match. This diagram is merely illustrative and not limiting.

In one embodiment of a digital fingerprint matching process, one may define "Strong Matches" and "True Matches" (although the terms selected are not important). A strong match (in our terminology) doesn't have a geometric arrangement or requirement with respect to neighboring points of interest. It can find a match anywhere; that is, it finds those point of interest feature descriptions or feature vectors that are "close enough" to the one being matched. A true match is then a strong match that also meets the geometric requirements (e.g. in the correct x, y location, in the correct location up to, say, a scale factor, or up to a selected rotation, or so on).

The origin of the coordinates in the "true match" case typically is irrelevant because the matching process generally strives to be translation-invariant. Accordingly, only the relative positions of the points of interest are important. In the rare cases (e.g. dollar bills) where the test and reference objects were in the same position/scale/rotation, the matching process can apply an arbitrary point at all inductions (e.g. the upper left corner as 0, 0) and impose that coordinate system for all images.

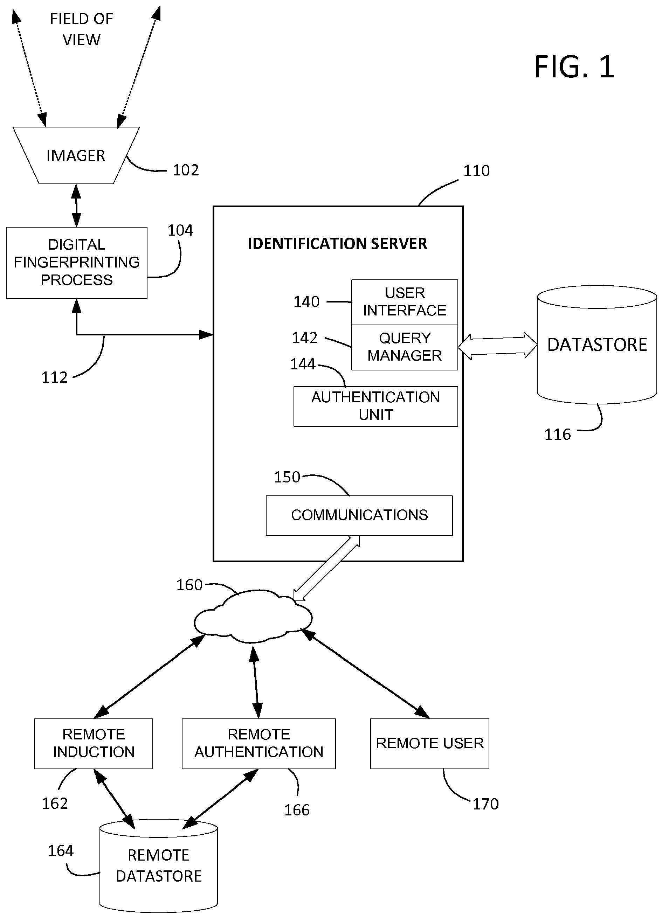

Figure 1 is a simplified block diagram of one example of a system consistent with the present disclosure. A person or other body or body part (not shown) may present a part of her body, for example, a hand, finger, face, etc. into the field of view of the scanner or imager 102, indicated by the dashed lines. The captured image data is processed by a process 104 to extract digital fingerprint(s) therefrom. Digital fingerprinting is described in more detail below. These elements may be discrete or integrated. For example, the scanner or imager may be a camera in a smartphone, and the digital fingerprinting process may be an app on the same smartphone. Alternatively, intermediate data (for example, digital image data) may be transmitted over a network to a remote processor to generate one or more digital fingerprints from the image data. For example, a remote induction facility 162 may communicate over a network 160 with an identification server 110, or simple induct the user by storing generated digital fingerprints into a datastore 164 coupled to the induction facility. The induction facility may comprise, for example, a program or a programmed server.

The digital fingerprint of the user or subject may be securely communicated to the server 110 via path 112 using known communications technology. The server 110 is coupled to (or includes) a datastore 116. The data store may contain various databases and or tables, including, for example, records that store digital fingerprints. The server may implement, for example, a user interface 140, a query manager 142 for interaction with the datastore 116, and authentication process or application 144. One use of the authentication process may be to identify and or authenticate a person based on an acquired digital fingerprint. To authenticate or identify a person, the authentication process 144 may acquire a digital fingerprint (from a local scanner 102 or remotely 162) and using the query manager 142, search the datastore 116 to find a matching (or best match) digital fingerprint record.

In this illustrative example, the server typically may also include a communications component 150. Various communications components 150 may be included to communicate for example, over a network 160 which may be local, wide area, internet, etc. The data control server may implement record keeping and various other workflows. As one example, the server may keep a log of persons traversing a particular doorway, hallway or other location, based on the authentication unit results.

All forms of capturing 2D, 3D surface, and/or 3D depth (*i.e.,* "inside") features are in view of the present disclosure. These include photon-based forms such as X-rays and tomography, and also non-photon approaches such as ultrasound. In the simplified drawing figure 1, the "IMAGER" 102 may comprise any or all of these imaging technologies.

Electromagnetic radiation in different frequency ranges can be used to gather both surface characteristic information and shape information, both of which may contribute to the characterization of a point of interest. Different methods can be concurrently used for the two types of data. For example, an infrared depth camera can provide shape information, and a visual light camera can provide surface image characteristics. The shape information and surface image characteristics information can be combined into the digital fingerprint.

This disclosure has in view the use of visible light, infrared (IR), ultraviolet (UV), and any other method of collecting surface image characteristics. The present disclosure covers the use of any method of gathering shape information, including stereo, focus stacking, structure from motion, pattern projection, time-of-flight, and Lidar.

The present disclosure covers any method of collecting internal data, whether depth-based, projective, or of any other means, including X-Rays, tomography, and high-frequency microwaves.

The present disclosure covers any one or combination of these methods of capturing, gathering, and collecting information, and any other like means of acquiring such information.

### Summary description of skin features

The present disclosure covers any method of extracting digital fingerprint features from a physiological element (e.g., a region of skin) whether it be relatively flat (e.g., the middle of the forehead) or substantially three-dimensional (e.g., the hand). The present disclosure also covers both two- and three-dimensional digital fingerprinting techniques as well as projective and depth-based X-raying and other imaging techniques. The following paragraphs describe some possible non-limiting approaches, which are examples only. Among the texture features of the physiological element (e.g., skin) may be abnormalities or variations in pigmentation, age spots, vascularization, tattoos, and many others. These features can be optically imaged and then extracted from the object using several known methods. The way in which these features are characterized is agnostic to where on the body they came from.

**Geometric feature relationships.** The individual features extracted from the physiological element (e.g., skin) as described herein may possess one or more geometric relationships among them, which are analyzed in particular identification and matching processes. At its simplest, features of the physiological element may preserve, from acquisition to acquisition, a discernible geometric relationship to each other. In at least some cases, a match between a reference set of biometric features and a test set of biometric features may require matches both individually and in their geometric relationship.

**Geodesically-linked features.** Many objects are not rigid and can deform between the induction of the object's digital fingerprints and the capture of test fingerprints at the time of identification. The hand and the face are examples that are relevant to present disclosure. It is well known that the bending of a surface does not change the geodesics (shortest distance paths) on that surface. The geodesic arrangement of points of interest that were extracted from, say, texture features therefore does not change significantly when a hand bends, for example. These geodesic arrangements are in view of the present disclosure.

**Affine-linked features.** Another form of distortion that typically occurs in a living organism (e.g., a human feature) between digital image acquisitions is stretching. The surface of the forehead may wrinkle, for example. There are many ways to capture Affine invariance in the arrangement of physiological element (e.g., skin) features and all are in view in this disclosure.

### Example system using the back of the hand

A person approaches a station and lays his hand flat. He may place his hand on a template or have it constrained in positioning, though such constraint is not a requirement of the systems, devices, and methods of the present disclosure. Along these lines, such constraint would be undesirable in a no-contact situation. For other physiological elements (e.g., forehead), non-contact imaging is expected to be the normal approach. The hand is imaged, and digital fingerprints are extracted based on the features of the hand. Some of these features are image-based (e.g., warts and age spots) while others may add shape or other characteristics as described herein.

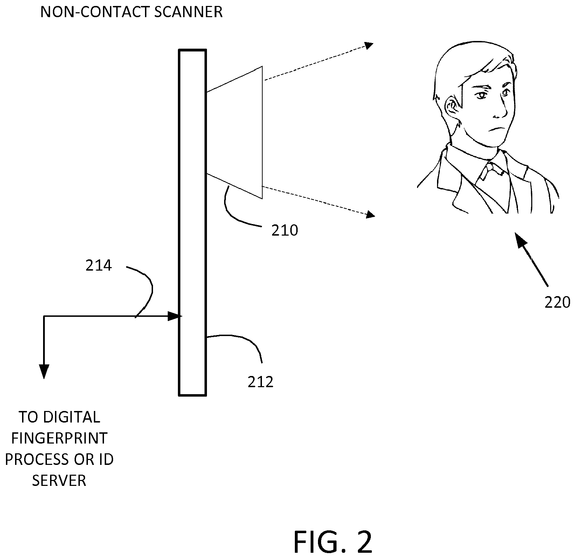

Figure 2 is a simplified illustration of an example of provisioning a non-contact scanner 210, here mounted on a preferably rigid supporting structure 212. The scanner 210 may capture images of a person or part of a person within its field of view, for example, the face of a man 220. As explained, any region of exposed skin of the person may be imaged to generate a digital fingerprint for identification. The generally digital image data may be transmitted via a connection 214 to a digital fingerprint process such as 104 in Figure 1.

Example embodiments of the imaging approach are given in the next several paragraphs. They are meant to be descriptive, not limiting. As a particular case in point, discussions of physical constraints are merely exemplary since, as discussed herein, imaging could be done with no contact with any surface.

**Two-dimensional (2D) Imaging.** At induction, a regular camera is used to capture a single high-resolution image of the back of the hand. The hand must be held relatively stationary, so an acceptable image can be captured. Because a single image is acquired or otherwise formed, and because the hand is not flat, the image in the present example is captured with an acceptable depth of field. This, in general, may be true of all body parts analyzed by a particular system, device, or method. That is, in-focus images of the physiological elements (e.g., parts of the skin) against which authentication is being performed is desirable. Focus stacking can be used to produce an all-in-focus 2D image of the hand.

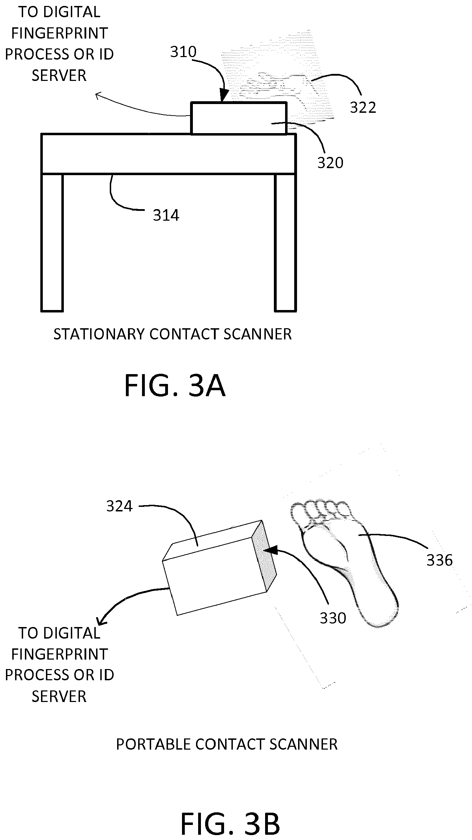

Figure 3A is a simplified diagram illustrating one example of image capture using a stationary contact scanner. Here, a scanner 320 is positioned on a supporting structure 314. The scanner has a contact surface 310. For example, the contact surface 310 may be transparent to frequencies of interest to a camera or other imager positioned inside the scanner 320 so that at least a portion of the contact surface is within the field of view of the imager, and at least the exterior surface of the contact surface is within a depth of focus of the imager. In this illustration, a back side of a hand 322 may be placed on the contact surface 310 for imaging.

Figure 3B illustrates using a portable contact scanner 324, which may be handheld. The portable scanner 324 has a contact surface 330 which may be used, for example, to capture one or more images of any portion of a foot 336.

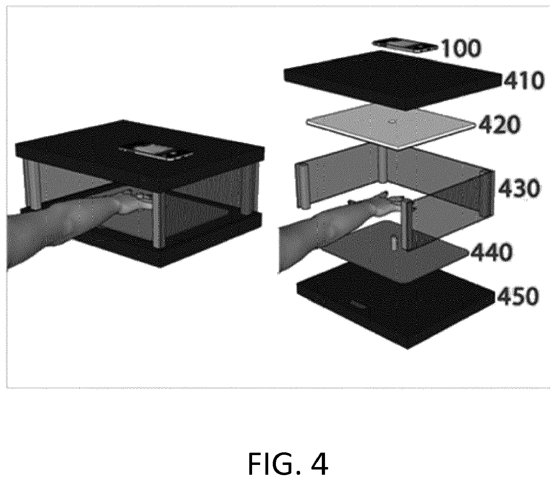

Figure 4 is a simplified diagram of one example of an image capture station. A generally flat, rigid substrate 450 supports a base layer 440. The base layer 440 preferably includes a post or other means for guiding placement of a subject's hand on the base layer. Sidewalls 430 are arranged on the base layer so as to form an enclosure above the base layer with one side open to receive a hand or other part for imaging. A top layer 420 covers the enclosure. A cover 410 fits on top of the top layer and supports an imaging device, for example, a smartphone 100. The smartphone camera is aligned over an aperture provided through the cover and the top layer for capturing an image of the body part positioned on the base layer. This simple arrangement is sufficient to capture images of the back of the hand sufficient to form a unique digital fingerprint of the subject.

**Three-dimensional (3D) Imaging.** 3D imaging can be done in several ways, all in view of the present disclosure. Stereo, depth mapping, structure from motion, plenoptic cameras, and focus stacking are examples. Points of interest may incorporate features based on the 3D shape of the object.

After the images are collected and, if necessary, combined, digital fingerprints are extracted and placed in a database as reference objects. These digital fingerprints contain characterizations of points of interest that may contain information on surface texture, surface shape, and internal features of the body part.

Later, when the hand is again presented to a similar acquisition station, the resulting digital fingerprint will be compared with the reference database and the best candidate chosen for identification.

### Other Non-Limiting Examples

**Forehead.** Although the forehead may be considered part of the face, the present disclosure is distinguished from conventional "face recognition." An image can be captured at a suitable distance, for example at a kiosk or by cameras located in a corridor.

**Full hand.** In addition to the back or the front of the hand, a full 3D representation of the hand can be acquired and processed for digital fingerprinting. The present disclosure contemplates capture of one or two hands of the person.

**Full foot.** Hospitals often take footprints of newborns to aid in their identification. Systems, devices, and methods of the present disclosure can be used to capture the bottom of the foot, the top of the foot, or the entire foot for use in identification.

The systems, devices, and methods of the present disclosure are not directed to shape-only based methods, such as the use of image ray transforms for ear-shape-based methods. These conventional techniques are different because they are shape-only and directed only to a particular body part. The systems, devices, and methods of the present disclosure are further distinguishable from known fingerprint techniques, animal (e.g., cow, pig) snout patterns, known face recognition systems, and iris or retina-based systems.

One distinction over conventional techniques is generality. All current methods of biometric identification are designed for and work on specific body parts. Conversely, the systems, devices, and methods of the present disclosure work on any location of any living organism where any physiological element (e.g., skin) can be imaged. The systems, devices, and methods of the present disclosure can recognize cow snouts, faces, palms, soles of feet, tips of fingers, and many other physiological elements, but unlike existing systems, the systems, devices, and methods described herein disclose a general approach that concurrently works on all of those, and the conventional systems are specific to a given body part. Trying to use fingerprinting technology, for example, on the back of the hand would be futile, while systems, devices, and methods of the present disclosure will work concurrently in both areas. Existing approaches rely heavily on structures that are present in very limited parts of the body - pigment diffusion in the iris, blood vessel growth in the retina, fingerprint ridges and whorls, for example. The approach disclosed herein uses features (e.g., growth patterns, imperfections, aging, and the like) that are present wherever physiological element (*e.g.,* skin) can be imaged.

While there are many ways of performing biometric identification, conventional systems all focus on the specific features of the specific area used for the biometric identification of the specific technique. Thus, conventional face recognition may use the spacing between the eyes and the relative arrangements of various parts of the face as features. Conventional fingerprinting requires data on the fingertips. Differently, however, the systems, devices, and methods of the present disclosure do not require anything special for any part of any body other than the ability to act on acceptable quality images of the physiological element. For example, the only variation between using the middle of the forehead versus the back of the hand is how the images are captured. A single embodiment in accordance with the systems, devices, and methods of the present disclosure will work on a plurality of different types of physiological elements once those images are successfully extracted.

To be specific, a single embodiment in accordance with the systems, devices, and methods of the present disclosure has the ability to use any selected portion of the physiological element (e.g., skin) to do biometric identification without having to change the technology each time a different physiological element is selected.

The systems, devices, and methods of the present disclosure do not require contact with the physiological element (e.g., body part), which is different from things like finger, palm, and sole of foot-based systems.

**Liveness testing.** Because technology described in the present disclosure works on any region of any physiological element (e.g., skin), any part of the living organism (e.g., body) can be authenticated. This means, for example, that a seemingly random location on the skin could be specified at an identification station. Because what is asked for need not be determined in advance, this allows for liveness testing (i.e., determining that it is a live person standing before you).

**Combination of approaches.** In the systems, devices, and methods of the present disclosure, different methods of obtaining data can be combined. For example, X-rays may be used to find internal features and, at the same time, characterize the shape and texture of the physiological feature of interest (e.g., skin). These techniques can be used to provide more thorough authentication, and can also be used to allow for changes in the living organism (e.g., aging of a person). Consider as one example a person who uses x-ray of the hand as part of the method of data collection. That person then breaks a finger. If the person's skin-based authentication and x-ray-based authentication are tied together, the first can be used to allow a secure update of the second.

**Detection of nefarious changes.** In addition to authenticating a person (or a cow!) the teachings of the present disclosure can be used to detect or prevent nefarious practices. For example, if any part of the body might be used for authentication, it would be extremely difficult for a spoofer to either make copies of enough of the body to let them fool the system or detach sufficient body parts to fool a random area liveness testing system. A depth-based method (e.g., using X-rays) could, for example, detect the addition of a subcutaneous chip.

**Asymmetry.** Also in view in this disclosure is asymmetric use of different approaches. For example, the systems, devices, and methods of the present disclosure could induct many different physiological elements (e.g., parts of the body) but only use one or two for authentication. Another example would be characterizing the projective X-ray features of an entire hand at induction but only looking at a small area of the hand at authentication.

In the foregoing description, certain specific details are set forth to provide a thorough understanding of various disclosed embodiments. However, one skilled in the relevant art will recognize that embodiments may be practiced without one or more of these specific details, or with other methods, components, materials, etc. In other instances, well-known structures associated with electronic and computing systems including client and server computing systems, as well as networks have not been shown or described in detail to avoid unnecessarily obscuring descriptions of the embodiments.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" and variations thereof means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or ideas.

The headings and Abstract of the Disclosure provided herein are for convenience only and do not limit or interpret the scope or meaning of the embodiments.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

The various embodiments described above can be combined to provide further embodiments. Aspects of the embodiments can be modified, if necessary, to employ concepts of the various patents, application and publications to provide yet further embodiments.

**Example Embodiments.** Further examples of embodiments of the present invention are defined, without limitation, by the following Enumerated Example Embodiments (EEEs):
EEE1: An authentication system, comprising:
   at least one device arranged to provide digital images of a physiological element, the physiological element formed at a location of a living body;
   a digital fingerprinting unit arranged to form a digital fingerprint from each of the provided digital images, wherein the digital fingerprinting unit is arranged to form the digital fingerprints of a plurality of different types of physiological elements;
   an association unit arranged to associate each digital fingerprint with its corresponding living body;
   a storage unit arranged to store the digital fingerprints; and
   an authentication unit arranged to compare a newly acquired digital fingerprint to at least some of the digital fingerprints stored by the storage unit and based on a determined match, the authentication unit arranged to output an indication of authenticity.
EEE2: The authentication system of EEE1 wherein the different types of physiological elements include different body parts of a human being.
EEE3: The authentication system of EEE1 wherein the different types of physiological elements include different areas of skin of a human being.

These and other changes can be made to the embodiments in light of the above-detailed description. In general, in the following claims, the terms used should not be construed to limit the claims to the specific embodiments disclosed in the specification and the claims but should be construed to include all possible embodiments along with the full scope of equivalents to which such claims are entitled. Accordingly, the claims are not limited by the disclosure.

## Claims

1. An authentication system, comprising:
at least one image capture device arranged to provide one or more digital images of a physiological element, the physiological element formed at a location on or in a body, living or dead;
a digital fingerprinting unit arranged to form a digital fingerprint from the provided digital images, wherein the digital fingerprinting unit is arranged to form the digital fingerprint responsive to at least one physiological element represented in the digital images, wherein the digital fingerprint unit forms the digital fingerprint in a manner that is agnostic to the location of the physiological element on or in the body;
a storage unit arranged to store the digital fingerprints;
an authentication unit having access to the storage unit and arranged to compare an acquired digital fingerprint to at least some of the digital fingerprints stored in the storage unit to generate a result; and
wherein the authentication unit is configured to transmit a message based on the result.

2. The authentication system of claim 1 wherein: the image capture device is arranged to capture at least one 2D image as the provided digital image;
the body has skin and the location of the physiological element is on an exterior surface region of the skin; and
forming the digital fingerprint includes extracting at least one skin feature from the 2D image of the exterior surface region of the skin and storing data responsive to the extracted skin feature in the digital fingerprint.

3. The authentication system of claim 2 wherein the extracted skin feature comprises at least one skin texture feature selected from a set of skin texture features that includes abnormalities or variations in pigmentation, age spots, birth marks, vascularization, pores, hair follicles, and tattoos; and/or
wherein:
the extracted skin feature comprises at least two skin texture features, and the data stored in the digital fingerprint includes data responsive to each of the two extracted skin texture features and a geometric relationship of the two skin texture features;
and wherein the digital fingerprint specifies that a match between a reference set of biometric features and the two extracted skin texture features requires that the two extracted skin texture features match the reference set both individually and in their geometric relationship.

4. The authentication system of claim 2 or claim 3 wherein:
the image capture device is arranged to capture plural images and apply focus stacking using the plural images to produce a single all-in-focus 2D image of the surface region of the skin; and
forming the digital fingerprint includes extracting at least one skin feature from the all-in-focus 2D image of the exterior surface region of the skin and storing data responsive to the extracted skin feature in the digital fingerprint; and/or
wherein the extracted skin feature includes at least one point of interest based on texture of the skin and a location of the point of interest; and/or
wherein the extracted skin feature includes at least one point of interest and at least one local principal curvature and its direction.

5. The authentication system of any of claims 1-4 wherein extracting at least one feature from the image comprises applying at least one of Scale-Invariant Feature Transform (SIFT), Speeded Up Robust Features (SURF), or other feature detection approaches resistant to scale, rotation, translation and illumination variations; and/or
wherein the image capture device utilizes at least one of visible light, IR, UV, and any electromagnetic radiation-based method of collecting surface image characteristics.

6. The authentication system of any of claims 1-5 wherein:
the image capture device is arranged to capture at least one 3D image as the provided digital image;
the location of the physiological element on a surface of the body; and
forming the digital fingerprint includes extracting at least one feature from the 3D image and storing data responsive to the extracted feature in the digital fingerprint; and/or
the authentication system further comprising first and second different types of image capture devices, the first and second image capture devices each arranged to provide one or more digital images of the physiological element, and wherein the digital fingerprint is formed based on digital images from both of the first and second image capture devices; and/or
wherein the image capture device comprises a camera and a rigid contact surface fixed in a position within a field of view of the camera, so that the camera can capture an image of a portion of a person's body placed on the contact surface.

7. The authentication system of any of claims 1-6 wherein the image capture device is positioned to capture the image of the physiological element without contacting the body; and/or
wherein the message is based on the result and identifies a best candidate for identification of the body.

8. The authentication system of any of claims 1-7 wherein: the image capture device is arranged to capture at least one 3D image as the provided digital image; the location of the physiological element is inside the body; and forming the digital fingerprint includes extracting at least one feature from the 3D image and storing data responsive to the extracted feature in the digital fingerprint; and/or
wherein the extracted feature includes at least one point of interest and a location of the point of interest in the body; and/or
extracting at least one feature from the 3D image comprises applying at least one of Scale-Invariant Feature Transform (SIFT), Speeded Up Robust Features (SURF), and other feature detection approaches resistant to scale, rotation, translation and illumination variations.

9. The authentication system of any of claims 1-8 wherein: the image capture device is arranged to capture at least one 3D image as the provided digital image; the location of the physiological element is on a surface of the body; and forming the digital fingerprint includes extracting at least one feature from the 3D image and storing data responsive to the extracted feature in the digital fingerprint; and/or
wherein the datastore points of interest are based on digital images provided by at least one of X-rays, tomography, and ultrasound image capture devices; and/or
wherein the image capture device is arranged to gather shape information about the physiological element, utilizing at least one of stereo imaging, focus stacking, structure from motion, pattern projection, time-of-flight, and Lidar technologies or any other means for acquiring a three-dimensional surface map of the body to capture the shape information; and the digital fingerprinting unit is arranged to store in the digital fingerprint data responsive to the surface map.

10. The authentication system of claim 9 wherein the digital fingerprinting unit stores at least one direction of a surface normal of the surface map.

11. The authentication system of any of claims 1-10 wherein: the physiological element is formed at a location inside of the body; the image capture device is arranged to provide digital images responsive to features inside the body; and the digital fingerprinting unit is arranged to form the digital fingerprint responsive to at least one of the features extracted from the digital images; and/or
wherein the digital fingerprinting unit stores an (x, y, z) location of the feature inside the body in the digital fingerprint; and/or
wherein the feature is a 3D shape or a 2D projection of a shape and the digital fingerprinting unit stores at least one local principal curvature of the shape and a direction of the principal curvature in the digital fingerprint; and/or
wherein the feature is a 3D shape or a 2D projection of a shape and the digital fingerprinting unit stores at least one direction of a surface normal of the shape in the digital fingerprint.

12. A method comprising:
provisioning access to a datastore of digital fingerprint information, the datastore comprising digital fingerprint records of reference objects, wherein the digital fingerprints contain characterizations of points of interest in or on the reference objects;
acquiring a test digital image;
processing the test digital image to form a test digital fingerprint, the processing including extracting points of interest from the test digital image and storing characterizations of the extracted points of interest in the test digital fingerprint;
comparing the test digital fingerprint to the datastore to find a matching digital fingerprint record; and
reporting a result of the comparison.

13. The method of claim 12 wherein the datastore digital fingerprints contain characterizations of points of interest of the reference objects; and
the datastore points of interest are based on digital images captured using at least one of 2D, 3D surface, and/or 3D depth image capture devices.

14. The method of claim 12 or claim 13 wherein the datastore points of interest are based on digital images provided by at least one of X-rays, tomography, and ultrasound image capture devices.

15. The method of any of claims 12-14 wherein the digital fingerprints contain information comprising at least one of surface texture, surface shape, and internal features of the physiological element.
